# EUROPÄISCHE PATENTSCHRIFT

(11) **EP 3 175 307 B1**
(45) Veröffentlichungstag und Bekanntmachung des Hinweises auf die Patenterteilung: **04.09.2019**
(21) Anmeldenummer: 14781488.3
(22) Anmeldetag: 25.09.2014
(51) Int. Cl.: G05B 19/418

(54) **BEREITSTELLEN VON PROZESSWERTEN IN EINER PROZESSANLAGE**
PROVIDING PROCESS VALUES IN A PROCESS SYSTEM
PRODUCTION DE VALEURS DE PROCESSUS DANS UN SYSTÈME DE PROCESSUS

(43) Veröffentlichungstag der Anmeldung: 07.06.2017
(73) Patentinhaber: Siemens Aktiengesellschaft, 80333 München (DE)
(72) Erfinder: DEIRETSBACHER, Karl-Heinz, 91090 Effeltrich (DE); ERLMANN, Markus, 95336 Mainleus (DE); KERSCHBAUM, Sven, 90768 Fürth (DE); VOLKMANN, Frank, 90475 Nürnberg (DE)
(86) Internationale Anmeldenummer: PCT/EP2014/070523
(87) Internationale Veröffentlichungsnummer: WO 2016/045736

(56) Entgegenhaltungen:
- WO-A1-2013/178270

## Beschreibung

Die Erfindung betrifft eine Anlage zum Steuern eines Prozesses, beispielsweise eines Fertigungsprozesses, in welcher ein Servergerät zu zumindest einem Prozessparameter, beispielsweise einer Temperatur, zu unterschiedlichen Sendezeitpunkten den aktuellen Prozesswert ermittelt und an mehrere andere Geräte, hier Clientgeräte genannt, verteilt. Zu der Erfindung gehören auch ein entsprechendes Servergerät und ein entsprechendes Clientgerät sowie ein Verfahren zum Betreiben des Servergeräts.

In automatisierungstechnischen Anlagen, oder kurz Anlagen, besteht die Notwendigkeit, zwischen unterschiedlichen Geräten Prozessinformationen auszutauschen, also jeweilige aktuelle Prozesswerte zu unterschiedlichen Prozessparametern, wie beispielsweise einer Temperatur, einer Drehzahl, einem Druck. Hierfür hat sich ein Standardprotokoll etabliert, das als OPC Unified Automation/Architecture (OPC UA) der OPC-Foundation bezeichnet wird (OPC - OLE for process control, OLE - object linking and embedding).

In solchen Szenarien ist es häufig der Fall, dass mehrere Konsumenten der Prozessinformationen, d.h. Clientgeräte, an denselben Prozessinformationen interessiert sind, die somit von dem OPC-UA-Server, d.h. dem Servergerät, mehrfach, nämlich jeweils mindestens einmal, an die verschiedenen Clientgeräte gesendet werden. Hinzu kommt, dass OPC UA diesen Datentransport z.B. durch Empfangsbestätigungen absichert. Hierfür setzt OPC UA voraus, dass die Clientgeräte und das Servergerät ihre jeweilige Identität im Datennetzwerk kennen. Dies wird zwischen dem jeweiligen Clientgerät und dem Servergerät mittels einer Peer-to-Peer-Verbindung sichergestellt, die als OPC-UA-Session oder OPC-UA-Sitzung bezeichnet wird.

Bei einem Betrieb einer Anlage kann es vorkommen, dass ein Servergerät durch das Verwalten der Verbindungen oder Sitzungen und das mehrfache Aussenden von aktuellen Prozesswerten überlastet wird. Hier ist es dann nötig, ein schaltungstechnisch aufwändigeres und damit in der Herstellung kostspieligeres Servergerät bereitzustellen. Zudem kann das vielfache Aussenden von Prozesswerten das Kommunikationsverhalten der Anlage beeinträchtigen, da das vielfache Übertragen der Prozesswerte die Kommunikation anderer Geräte blockiert.

Aus der WO 2013/178270 A1 ist bereits ein Verfahren bekannt, welches es in dem OPC-UA Protokoll ermöglicht, eine OPC-UA Variablenabfrage über eine TCP-IP Multicastadresse an mehrere Clients durchzuführen.

Der Erfindung liegt die Aufgabe zugrunde, einen Austausch von Prozesswerten zwischen Geräten einer Anlage effizient zu gestalten.

Die Aufgabe wird durch die Gegenstände der unabhängigen Patentansprüche gelöst. Vorteilhafte Weiterbildungen der Erfindung sind durch die Merkmale der abhängigen Patentansprüche gegeben.

Die Erfindung ist durch die unabhängigen Ansprüche definiert. Vorteilhafte Ausgestaltungen ergeben sich durch die abhängigen Ansprüche. Erfindungsgemäß wird ein Verfahren bereitgestellt, mittels welchem ein Server oder Servergerät in einer Anlage betrieben wird. Bei der Anlage kann es sich um eine automatisierungstechnische Anlage handeln, die beispielsweise zur Fertigung eines Produkts (z.B. dem Herstellen eines Kraftfahrzeugs) oder zum Durchführen eines Prozesses (wie beispielsweise der Energieerzeugung auf Grundlage von Kernkraft) öder zum Steuern eines Systems (beispielsweise das Steuern von Ampeln in einem Stadtbezirk) handelt. Der Prozess kann auch innerhalb eines einzelnen Apparates angeordnet sein, beispielsweise kann es sich um die Steuerung eines Roboters zur Koordination einzelner Geräte des Roboters, beispielsweise seiner Sensoren und Aktoren, handeln. Ein anderer Apparat kann beispielsweise eine Fertigungsstation sein, beispielsweise eine Lackierstation oder eine Flaschenabfüllstation. Auch innerhalb solcher Stationen kann ein Prozess die gewünschte Funktionalität der Station bereitstellen. Somit fallen unter den Begriff "Anlage" bevorzugt auch ein solcher Apparat und eine solche Station.

Der gesteuerte Prozess weist zumindest einen Prozessparameter auf, der sich durch den Ablauf des Prozesses verändern kann, beispielsweise eine Temperatur, einen Druck, eine Drehlage beispielsweise eines Rotors oder einer Welle, oder eine Geschwindigkeit beispielsweise eines Fließbandes. Das Servergerät ermittelt zu unterschiedlichen Sendezeitpunkten zu dem zumindest einen Prozessparameter jeweils einen aktuellen Prozesswert, also beispielsweise die aktuelle Temperatur oder den aktuellen Druck. Das Servergerät kann dazu beispielsweise einen Temperatursensor oder einen Drucksensor oder eine Motorsteuerung für einen Elektromotor oder ein Steuergerät für einen Roboter aufweisen.

Der jeweilige aktuelle Prozesswert des zumindest einen Prozessparameters soll an mehrere Clientgeräte der Anlage ausgesendet werden. Ein Clientgerät kann ebenfalls beispielsweise eine Motorsteuerung oder eine andere Aktorsteuerung oder ein Sensor sein. Jedes der Clientgeräte kann dabei von dem Servergerät entweder zu jedem des zumindest einen Prozessparameters den aktuellen Prozesswert benötigen oder auch nur zu einer Untermenge davon, also einem oder einigen. Entsprechend sendet das Servergerät an mehrere Clientgeräte der Anlage jeweils zu jedem oder einer Untermenge des zumindest einen Prozessparameters zum jeweiligen Sendezeitpunkt den jeweils ermittelten aktuellen Prozesswert über ein Datennetzwerk, beispielsweise ein Ethernet oder einen Profinet-Bus, aus.

Um hierbei den erzeugten Datenverkehr auf dem Datennetzwerk effizient zu gestalten, führt das Servergerät folgende Schritte aus. Das Servergerät bildet eine Schnittmenge aus zumindest einem Prozessparameter, der an mehr als eines der Clientgeräte auszusenden ist. In der Schnittmenge sind also all diejenigen Prozessparameter angegeben, deren jeweiliger aktueller Prozesswert zu den unterschiedlichen Sendezeitpunkten jeweils an mehr als ein Clientgerät auszusenden ist. Die Schnittmenge beschreibt also eine Parametergruppe oder Variablengruppe. Von jedem Prozessparameter oder jeder Variable, die in der Schnittmenge enthalten ist, muss an mehr als ein Gerät der aktuelle Wert berichtet werden, d.h. der jeweils aktuelle Wert muss an mehr als ein Gerät über das Datennetzwerk ausgesendet werden.

Entsprechend fasst das Servergerät zu den unterschiedlichen Sendezeitpunkten jeweils die aktuellen Prozesswerte des zumindest einen Prozessparameters der Schnittmenge zu einem einzigen Multitarget-Telegramm zusammen, d.h. einen Datensatz oder eine Nachricht. Nun wird nicht an jedes der Geräte jeweils eine Kopie dieses Multitarget-Telegramms ausgesendet, sondern das Servergerät sendet das Multitarget-Telegramm an eine Gruppenadresse in das Datennetzwerk aus. Je nach verwendetem Kommunikationsstandard für das Datennetzwerk kann es sich bei der Gruppenadresse beispielsweise um eine MulticastAdresse oder eine Broadcast-Adresse handeln, falls der Kommunikationsstandard IP (Internet Protocol) verwendet wird.

Durch die Erfindung ergibt sich der Vorteil, dass im Servergerät Rechenleistung eingespart wird, da die Prozesswerte nicht mehrfach gesendet werden müssen und das Servergerät entsprechend die Prozesswerte nur einmal für mehrere Clientgeräte aufbereiten muss. Dies ist insbesondere in der Feldebene einer Anlage vorteilhaft, wo ein Servergerät ein leistungsschwaches Gerät, beispielsweise ein Sensor, sein kann.

Das Verfahren umfasst natürlich auch Ausführungsformen, bei welchen das Servergerät mehrere unterschiedliche Schnittmengen bildet. Des Weiteren ist der Begriff Servergerät nicht auf ein Gerät beschränkt, das ausschließlich als Datenquelle für Prozesswerte betrieben wird. Das Servergerät für den zumindest einen Prozessparameter kann zugleich im Zusammenhang mit zumindest einem anderen Prozessparameter ein Clientgerät sein, welches aktuelle Prozesswerte zu dem zumindest einen anderen Prozessparameter von einem anderen Servergerät empfängt.

Welche Schnittmenge in dem erfindungsgemäßen Servergerät gebildet wird, kann beispielsweise in einer Vorprojektierung beim Konfigurieren der Anlage durch Konfigurieren des Servergeräts festgelegt werden. Hierdurch ergibt sich der Vorteil, dass keine Rechenressourcen zum Ermitteln der Schnittmenge während des Betriebs der Anlage benötigt werden.

Ein weiterer Vorteil ergibt sich, wenn das Aushandeln der Schnittmenge beim Verbindungsaufbau zwischen Servergerät und Clientgeräten durchgeführt wird, sodass die Schnittmenge dynamisch nach dem aktuellen Bedarf der Clientgeräte gebildet wird. Die Anlage ist dann selbstkonfigurierend. Das Servergerät empfängt hierzu von jedem Clientgerät ein jeweiliges Anfragetelegramm, d.h. einen Datensatz oder eine Nachricht, in welcher angegeben ist, von welchem des zumindest einen Prozessparameters die Prozesswerte an das Clientgerät auszusen-den sind. Das Anfragetelegramm stellt eine digitale Nachricht dar, die über das Datennetzwerk von dem jeweiligen Clientgerät an das Servergerät gesendet wird. Durch das Anfragetelegramm definiert also das Clientgerät z.B. die Untermenge derjenigen Prozessparameter, zu denen das Clientgerät die Pro-zesswerte benötigt. Ein anderer Begriff für diesen Vorgang ist auch Subskription oder Abonnement (Englisch: Subscription). Das Servergerät bildet dann auf Grundlage der empfangenen Anfragetelegramme die Schnittmenge.

Zu der Schnittmenge legt das Servergerät die Gruppenadresse fest und teilt die Gruppenadresse denjenigen Geräten mit, in deren Anfragetelegramm der zumindest eine Prozessparameter der Schnittmenge angegeben ist. Damit ist seitens der Clientgeräte bekannt, dass die Prozesswerte zu zumindest einem von ihnen benötigten Prozessparameter nicht an ihre Clientadresse direkt gesendet werden, sondern an eine Gruppenadresse. Entsprechend müssen durch das jeweilige Clientgerät die Multitarget-Telegramme, die an diese Gruppenadresse adressiert sind, von den Clientgeräten aus dem Datennetzwerk ausgelesen werden. Diese Ausführungsform weist den Vorteil auf, dass das Servergerät die Schnittmenge dynamisch an den Bedarf der Clientgeräte im Betrieb der Anlage anpasst. Diese Ausführungsform umfasst entsprechend auch Varianten, bei welchen während des Betriebs der Anlage ein Clientgerät erneut ein Anfragetelegramm sendet und das Servergerät die Schnittmenge neu festlegt.

Das erfindungsgemäße Verfahren lässt sich problemlos mit dem bekannten und für automatisierungstechnische Anlagen etablierten Standardprotokoll OPC UA kombinieren. Hierzu sieht eine Ausführungsform vor, dass das Servergerät von zumindest einem der Clientgeräte das jeweilige Anfragetelegramm in einer Konfigurationsphase, also z.B. beim Hochfahren der Anlage, über eine Netzwerkverbindung während einer OPC-UA-Sitzung nach dem Standard OPC UA empfängt. Optional kann die OPC-UA-Sitzung am Ende der Konfigurationsphase geschlossen werden, wenn also das Servergerät und die Clientgeräte den eigentlichen Betrieb der Anlage, nämlich das Steuern des Prozesses, aufnehmen. Dies kann sinnvoll sein, wenn in der Betriebsphase ansonsten z.B. keine OPC-UA-konforme Kommunikation in der Anlage benötigt wird. Eine Session ist somit in vorteilhafter Weise nur zum Einrichten und Verwalten einer solchen zykli-schen Datenübertragung der Prozesswerte notwendig. Während die eigentliche zyklische Aktualisierung von Prozesswerten läuft, also in der Normalbetriebsphase der Anlage, ist kein Verwaltungsaufwand für eine Session nötig, weder auf Seiten der Clientgeräte noch auf der des Servergeräts. Die Konfigurationsphase kann auch zyklisch neu eingeleitet werden, beispielsweise nach einem Standby der Anlage.

In einer Anlage kann das Servergerät die Datenpakete, also das jeweilige Multitarget-Telegramm mit den aktuellen Prozesswerten, zyklisch für jede Variablengruppe aussenden, also jede Schnittmenge. Hierbei wird das Sendeverhalten des Servergeräts durch Sendeparameter festgelegt, also beispielsweise die Updaterate, welche die Sendezeitpunkte festlegt, die maximale Anzahl von Variablen, die in einem Multitarget-Telegramm enthalten sind, Dead-Bands (Triggerwerte, bei deren Überschreiten oder Unterschreiten ein Prozesswert ausgesendet wird). Hierbei kann es vorkommen, dass zwei Clientgeräte zwar zu demselben Prozessparameter die aktuellen Prozesswerte wünschen, hierbei aber ein unterschiedliches Sendeverhalten des Servers benötigen, beispielsweise unterschiedliche Updateraten. Um dies zu berücksichtigen, sieht eine Ausführungsform des Verfahrens die folgenden Schritte vor. Das Servergerät empfängt von jedem Clientgerät jeweils zumindest einen von dem Clientgerät vorgegebenen Sendeparameterwert zu einem Sendeparameter, also beispielsweise zu einer Updaterate den Wert 200 pro Sekunde. Zum Bilden der Schnittmenge wählt das Servergerät aus dem zumindest einen Prozessparameter, zu welchem es aktuelle Prozesswerte ermitteln kann, die Schnittmenge derart aus, dass die Sendeparameter jedes Prozessparameters der Schnittmenge ein vörbestimmtes Ähnlichkeitskriterium erfüllen. Mit anderen Worten werden nur solche Prozessparameter zur Schnittmenge zusammengefasst, für die ein gemäß dem Ähnlichkeitskriterium ähnliches Sendeverhalten von den Clientgeräten vorgegeben ist. Wird beispielsweise für eine Temperatur eine Updaterate von einem aktuellen Prozesswert pro Minute benötigt, für eine Drehzahl aber eine Updaterate von 100 Prozesswerten pro Minute, so kann es Sinn machen, diese beiden Prozessparameter (Temperatur, Drehzahl) nicht in derselben Schnittmenge zusammenzufassen, obwohl die Prozesswerte an dieselben Gruppe von Clientgeräten auszusenden sind. Das Ähnlichkeitskriterium kann beispielsweise eine vorbestimmte maximale absolute Differenz zwischen den Sendeparameterwerten der Clientgeräte vorgeben. Das Ähnlichkeitskriterium kann beispielsweise vorgeben, dass die Siendeparameterwerte ein ganzzahliges Vielfaches voneinander sein dürfen. Durch diese Ausführungsform ergibt sich der Vorteil, dass die gebildete Schnittmenge oder die mehreren gebildeten Schnittmengen genauer an den Bedarf der Anlage angepasst werden können.

Das resultierende Sendeverhalten wird insbesondere über den Standard OPC-Mechanismus beim Aufbau einer Subscription ausgehandelt. Denn das Ähnlichkeitskriterium lässt in der beschriebenen Weise bevorzugt auch Unterschiede in den Sendeparameterwerten zu. Um nun konkrete Sendeparameterwerte zum Aussenden jedes Multitarget-Telegramms zu finden, sieht eine Ausführungsform vor, dass das Servergerät für zumindest einen Sendeparameter (beispielsweise die Sendezeitpunkte, d.h. Updaterate, maximale Anzahl von Variablen, Dead-Bands) einen jeweiligen optimalen Sendeparameterwert in Abhängigkeit von allen zu der Schnittmenge vorgegeben Sendeparameterwerten auf der Grundlage eines vorbestimmten Optimierungskriteriums ermittelt. Das Optimierungskriterium kann beispielsweise besagen, dass der größte Sendeparameterwert, also die größte Updaterate, genutzt werden soll. Es kann auch der kleinste Sendeparameterwert vorgesehen sei, beispielsweise die kleinste Anzahl von Variablen im Multitarget-Telegramm. Es kann auch beispielsweise ein Optimierungskriterium zur Periodizität festgelegt werden, dass eine Updaterate von 400 pro Minute und 200 pro Minute zu einer Updaterate von 200 pro Minute optimiert wird, da das Clientgerät, welches eine Updaterate von 400 pro Minute benötigt, einfach jedes zweite Multitarget-Telegramm ignorieren kann.

Sind dann die im Sinne des Optimierungskriteriums optimalen Sendeparameter gefunden, stellt das Servergerät zum Senden jedes Multitarget-Telegramms den zumindest einen Sendeparameter auf den jeweiligen optimierten Sendeparameterwert ein. Durch diese Ausführungsform ergibt sich der Vorteil, dass durch Vorgeben eines entsprechenden Optimierungskriteriums die technischen Bedürfnisse jedes Clientgeräts beim Festlegen der Sendeparameter für die Multitarget-Telegramme berücksichtigt werden können. Ein Entwicklungsingenieur kann durch Festlegen des Optimierungskriteriums zu einer spezifischen Anlage die Eigenschaften der Clientgeräte gezielt berücksichtigen.

Ein weiterer Vorteil ergibt sich durch eine Ausführungsform mit dem folgenden Schritt. Das Servergerät schließt den Sendevorgang jedes Multitarget-Telegramms jeweils unabhängig von einer Empfangsbestätigung der Clientgeräte ab. Mit anderen Worten sendet das Servergerät jedes Multitarget-Telegramm aus und wartet nicht auf eine Empfangsbestätigung, um zu überprüfen, ob das Multitarget-Telegramm erfolgreich bei jedem Clientgerät angekommen ist. Während also eine zyklische Aktualisierung von Prozesswerten läuft, ist vom Clientgerät keine Sendeleistung nötig. Dies ist im Sinne von Energieeinsparung und geringer Auslastung des Datennetzwerks vorteilhaft, insbesondere bei mobilen Geräten, die über eine drahtlose Kommunikation und/oder batteriebetrieben Prozesswerte vom Servergerät entgegennehmen. Die Praxis hat gezeigt, dass es in vielen Fällen ausreichend ist, dass ein Clientgerät über Änderungen informiert wird, ohne dass das Clientgerät sofort, im Millisekundenbereich, reagieren muss. Zum Beispiel die Übertragung eines Füllstands oder eines Gasdrucks. In solchen Szenarien ist es durchaus ausreichend, dass der Server über die beschriebene ungesicherte Übertragung, d.h. ohne Empfangsbestätigung, Multitarget-Telegramme aussendet und hierdurch über den aktuellen Zustand der Prozessparameter informiert. Das bedeutet, dass Telegramme verloren gehen können. Um trotzdem eine ausreichende Sicherheit der Übertragung zu gewährleisten, werden die Multitarget-Telegramme bevorzugt in einem konfigurierbaren Zeitabstand unabhängig von einer Wertänderung der Prozessparameter gesendet.

Das Clientgerät wird dann mit dem nächsten Telegramm über den aktuellen Wert informiert, ohne dass der Ausfall eines Telegramms einen nennenswerten Einfluss auf die Steuerung des Prozesses hat. Als besonders geeignet hat es sich erwiesen, Multitarget-Telegramme als UDP-Multitarget-Nachrichten oder UDP-Broadcast-Nachrichten (UDP - User Datagram Protocol) auszusenden. Als weiterhin vorteilhaft hat es sich erwiesen, die Multitarget-Telegramme in einem AVB-Stream (AVB - Audio-Video-Bridging) oder TSN-Stream (TSN - Time Sensitive Network) nach dem Standard IEEE 802.1 auszusenden. Durch diese Streamtechnik wird eine Bandbreite und eine Reihenfolge für die Übertragung von Multitarget-Telegrammen garantiert. Zudem kann die Kanalqualität (insbesondere Bandbreite und/oder maximale Verzögerung) durch Hardware in Echtzeit festgelegt werden.

Zur Performanzsteigerung kann für eine Variablengruppe oder Schnittmenge auch ausgehandelt werden, dass die Übertragung der Prozesswerte nicht alle vom beispielsweise OPC-UA-Standard geforderten Informationen enthält, sondern dass ein reduziertes Format verwendet werden kann. Hierzu sieht eine Ausführungsform des Verfahrens den Schritt vor, dass das Servergerät mit den Clientgeräten jeweils eine Formatvorgabe für ein reduziertes Format jedes Prozessparameters der Schnittmenge verhandelt, zu welchem an das jeweilige Clientgerät die Prozesswerte auszusenden sind. Das Servergerät bildet dann die Schnittmenge unter Berücksichtigung der ausgehandelten Formatvorgabe. Hierdurch kann in vorteilhafter Weise erreicht werden, dass ein Multitarget-Telegramm mit besonders wenigen Daten, d.h. ein besonders kurzes Multitarget-Telegamm, ausgesendet werden muss. Beispiele für Formatänderungen, die ohne signifikanten Einfluss auf die Prozesssteuerung ausgehandelt werden können, sind die folgenden. Es wird nur ein Zeitstempel für alle Prozesswerte oder Variablen vorgesehen. Es wird nur eine Quality-Information für alle Prozesswerte vorgesehen. Die Quality-Information entspricht den Sendeparameterwerten. Beispielsweise kann mit einem Clientgerät verhandelt werden, das eine Updaterate 400 pro Minute haben möchte, nur eine Updaterate von 200 pro Minute erhält, sodass es dieselbe Updaterate fordert wie ein anderes Clientgerät. Dann fällt der beschriebene Schritt der Optimierung der Sendeparameterwerte leichter. Es kann auch ausgehandelt werden, dass überhaupt kein Zeitstempel vorgesehen ist. Hier kann beispiels-weise auf eine Sequenz-Nummer reduziert werden, um weiterhin die Reihenfolge der Prozesswerte rekonstruierbar zu halten. Ein Clientgerät kann auch aufgefordert werden, auf seine Quality-Informationen, d.h. seine geforderten Sendewertparameter, ganz zu verzichten. Es kann ausgehandelt werden, dass der Datentyp der gesendeten Prozesswerte nur im ersten Multitarget-Telegramm angegeben wird. Es kann ausgehandelt werden, dass der Datentyp überhaupt nicht übertragen wird.

Für den Fall, dass das Servergerät mehrere Schnittmengen bildet, sieht eine Ausführungsform des Verfahrens eine weitere vorteilhafte Verbesserung vor. Das Servergerät bildet zusätzlich zu der Schnittmenge noch eine weitere Schnittmenge aus zumindest einem Prozessparameter, der an mehrere Clientgeräte auszusenden ist. Das Servergerät fasst die beiden Schnittmengen zusammen und sendet nur zu der größeren der beiden Schnittmengen an den unterschiedlichen Sendezeitpunkten das Multitarget-Telegramm aus, falls die kleinere Schnittmenge eine echte Teilmenge der größeren Schnittmenge ist. Falls das Servergerät beispielsweise die beiden Schnittmengen zu unterschiedlichen Initialisierungsphasen bildet, kann es vorkommen, dass Variablengruppen Teilmengen von anderen Variablengruppen sind. Solche Teilmengen werden dann in vorteilhafter Weise nicht separat publiziert, d.h. ausgesendet. Das Clientgerät erhält die Gruppen-ID, d.h. insbesondere die Gruppenadresse, der Obergruppe. Das Clientgerät kann sich dann die von ihm benötigten Prozesswerte aus dem Multitarget-Telegramm heraussuchen. Hierdurch wird ein vollständiges Multitarget-Telegramm pro Sendezeitpunkt eingespart.

Zu der Erfindung gehört auch entsprechend ein Gerät für eine Anlage zum Steuern eines Prozesses, wobei das Gerät dazu ausgelegt ist, als Servergerät eine Ausführungsform des erfin-dungsgemäßen Verfahrens durchzuführen. Das Servergerät kann beispielsweise als Aktor und/oder Sensor für die Anlage ausgestaltet sein, also beispielsweise als eine Ventilsteuerung oder ein Sensorgerät für einen Druck und/oder eine Temperatur und/oder eine Geschwindigkeit und/oder eine Drehzahl. Als Aktorgerät kann das Gerät beispielsweise eine Motorsteuerung umfassen oder eine Hydrauliksteuerung.

Zu der Erfindung gehört auch entsprechend ein Gerät für eine Anlage zur Steuerung eines Prozesses, welches als Clientgerät fungieren kann. Das Gerät ist dazu ausgelegt, an ein Servergerät ein Anfragetelegramm auszusenden, in welchem angegeben ist, von welchem von zumindest einem Prozessparameter, der durch das Servergerät überwacht wird, an das Clientgerät jeweils Prozesswerte auszusenden sind. Das Clientgerät sendet dieses Anfragediagramm über ein Datennetzwerk. Das Gerät ist des Weiteren dazu ausgelegt, von dem Servergerät eine Gruppenadresse über das Datennetzwerk zu empfangen. Des Weiteren ist das Gerät dazu ausgelegt, über das Datennetzwerk zu unterschiedlichen Sendezeitpunkten jeweils ein an die Gruppenadresse adressiertes Multitarget-Telegramm zu empfangen. Des Weiteren ist das Gerät dazu ausgelegt, aus den empfangenen Multitarget-Telegrammen zumindest einen darin enthaltenen Prozesswert auszulesen.

Wie bereits ausgeführt, kann ein und dasselbe Gerät sowohl als Servergerät als auch als Clientgerät ausgestaltet sein öder als solches betrieben werden.

Schließlich gehört zu der Erfindung noch eine Anlage zum Steuern eines Prozesses. Um welche Prozesse es sich beispielsweise handeln kann, ist bereits aufgeführt worden. Die Anlage weist zumindest ein Servergerät und mehrere Clientgeräte gemäß der Erfindung auf.

Im Folgenden ist ein Ausführungsbeispiel der Erfindung beschrieben. Hierzu zeigt:
- FIG 1: eine schematische Darstellung einer Ausführungsform der erfindungsgemäßen Anlage; und
- FIG 2: ein Ablaufdiagramm zu einer Ausführungsform des er-findungsgemäßen Verfahrens, das in der Anlage von FIG 1 durchgeführt werden kann.

Bei dem im Folgenden erläuterten Ausführungsbeispiel handelt es sich um eine bevorzugte Ausführungsform der Erfindung. Bei dem Ausführungsbeispiel stellen aber die beschriebenen Kompo-nenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

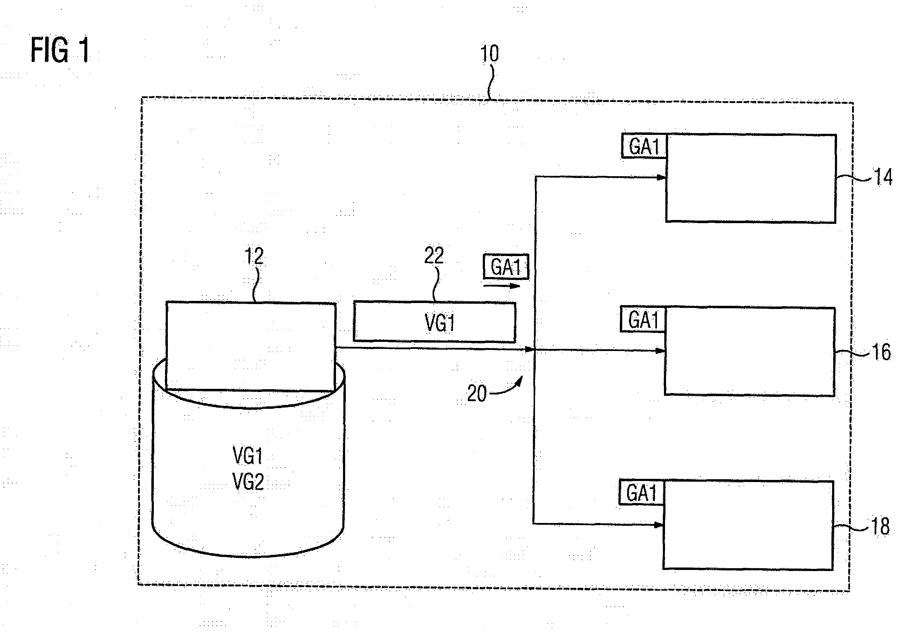

In FIG 1 ist eine automatisierungstechnische Anlage 10 gezeigt. Als Anlagenkomponenten kann die Anlage 10 ein Servergerät 12 und mehrere Clientgeräte 14, 16, 18 aufweisen. Das Servergerät 12 kann mit den Clientgeräten 14, 16, 18 über ein Datennetzwerk 20 gekoppelt sein. Die Geräte 12, 14, 16, 18 können dazu ausgelegt sein, gemäß dem Standard OPC UA miteinander über das Datennetzwerk 20 zu kommunizieren.

Die Anlage kann beispielsweise zum Steuern eines Produktions-prozesses, beispielsweise der Herstellung eines Produkts oder von Werkstücken, beispielsweise für Kraftfahrzeuge, ausgelegt sein. Die Anlage kann auch für eine Prozesssteuerung beispielsweise zur Energiegewinnung aus Kernkraft oder zur Klärung von Abwasser ausgestaltet sein. Die Anlage kann auch zum Durchführen eines Steuerprozesses, beispielsweise einer Verkehrsregelung mit Ampeln in einem Straßenverkehrsnetz, ausgelegt sein.

Bei jedem der Geräte 12, 14, 16, 18 kann es sich jeweils beispielsweise um einen Aktor und/oder Sensor handeln. Jedes Gerät 12, 14, 16, 18 stellt eine Anlagenkomponente dar, durch welche ein Teil des von der Anlage 10 zu steuernden Prozesses überwacht und/oder beeinflusst wird. Die Anlage 10 kann noch weitere (nicht dargestellte) Geräte aufweisen.

In dem in FIG 1 veranschaulichten Beispiel ist das Servergerät 12 für das Messen oder Ermitteln oder Überwachen und/oder das Einstellen von Prozessparametern A, B, C, D, H ausgelegt. Beispielsweise kann es sich bei den Prozessparametern jeweils um eine Temperatur oder einen Druck oder eine Durchflussrate oder eine Winkelposition oder eine andere, einen aktuellen Betriebszustand des Servergeräts 12 und/oder des von dem Servergerät 12 überwachten und/oder gesteuerten Teils der Anlage handeln. In dem Servergerät 12 können in einer Prozessoreinrichtung, beispielsweise einem Mikrocontroller oder einer Überwachungssoftware einer CPU (CPU - Central Processing Unit) die jeweiligen aktuellen Prozesswerte der Prozessparameter als Variablen A, B, C, D, H gespeichert sein. Da die Prozessparameter und die sie repräsentierenden Variablen A, B, C, D, H in dieser Beschreibung synonym verwendet werden können, sind hier dieselben Bezugszeichen verwendet. Auch aktuelle Prozesswerte oder Variablenwerte werden hier durch diese Bezugszeichen bezeichnet.

Zum Steuern des Prozesses durch die Anlage 10 kann es notwendig sein, dass die Clientgeräte 14, 16, 18 wiederholt die aktuellen Variablenwerte der Variablen A, B, C, D, H, d.h. die aktuellen Prozesswerte A, B, C, D, H, mitgeteilt oder übertragen bekommen, um ihrerseits den Prozess steuern zu können. Beispielsweise kann vorgesehen sein, dass das Clientgerät 14 (CLNT1) beispielsweise in Abhängigkeit von den Variablenwerten A, B, C der entsprechenden Prozessparameter beispielsweise Steuerbefehle oder ein Steuersignal erzeugt, das beispielsweise eine Umwälzpumpe steuert. Das Clientgerät 16 (CLNT2) kann beispielsweise in Abhängigkeit von den Variablenwerten A, B, C Steuerbefehle oder ein Steuersignal erzeugen, das beispielsweise ein Förderband steuert. Das Clientgerät 18 kann beispielsweise in Abhängigkeit von den Variablenwerten A, B, C beispielsweise ein Steuersignal erzeugen, um beispielsweise auf einem Bildschirm einen aktuellen Prozesszustand anzuzeigen.

Bei der Anlage 10 kann es daher notwendig sein, dass das Servergerät 12 die aktuellen Variablenwerte der Variablen A, B, C wiederholt zu unterschiedlichen Sendezeitpunkten über das Datennetzwerk 20 an mehrere der Clientgeräte 14, 16, 18 überträgt.

Hierbei ist bei der Anlage 10 vorgesehen, dass das Servergerät 12 die Variablenwerte A, B, C nicht jeweils einzeln an die Clientgeräte 14, 16, 18 sendet, also dreimal den Variablenwert A, dreimal den Variablenwert B und dreimal den Variablenwert C. Stattdessen werden die aktuellen Variablenwerte A, B, C zu einem Multitarget-Telegramm 22 zusammengefasst, das in das Datennetzwerk 20 an eine einzige Adresse, nämlich eine Gruppenadresse GA1, ausgesendet wird. Die Clientgeräte 14, 16, 18 können derart konfiguriert sein, dass sie das Multitarget-Telegramm 22 empfangen und verarbeiten, falls das Multitarget-Telegramm 22 an die Gruppenadresse GA1 adressiert ist.

Damit in dem Servergerät 12 bekannt ist, welche Variablenwerte A, B, C in dem Multitarget-Telegramm zusammenzufassen sind und an die Gruppenadresse GA1 auszusenden sind, können in dem Servergerät 12 Schnittmengen oder Variablengruppen VG1, VG2 gebildet worden sein, von denen jede festlegt, welche der Variablenwerte A, B, C, D, H jeweils in ein Multitarget-Telegramm zusammenzufassen sind und an welche Gruppenadresse GA1, GA2 das jeweilige Multitarget-Telegramm der jeweiligen Variablengruppe VG1, VG2 zu senden ist.

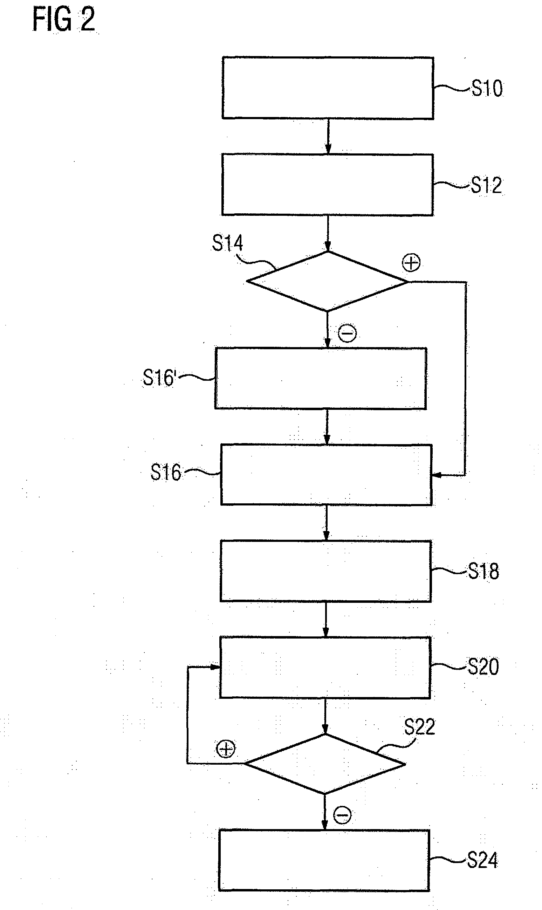

Zum Bilden der Variablengruppe VG1, VG2 kann das Servergerät 12 das nachfolgend beschriebene, in FIG 2 veranschaulichte Verfahren durchführen.

Das Aussenden von Multitarget-Telegrammen ist nicht Bestandteil des Standards OPC UA. Die Wertänderungen der Variablenwerte A, B, C werden über eine nicht-gesicherte Kommunikation außerhalb des OPC-UA-Transportkanals übertragen. Aufgrund der Tatsache, dass die Wertänderungen ungesichert übertragen werden, wird es möglich, dass dieselbe Wertänderung an mehrere Clientgeräte 14, 16, 18 mit einer Nachricht übertragen wird.

Der exemplarische Ablauf einer Kommunikation zwischen dem Servergerät einerseits und den Clientgeräten 14, 16, 18 andererseits kann wie folgt aussehen. Ein Clientgerät 14, 16, 18 baut in einem Schritt S10 eine Session im Sinne von OPC UA zu einem OPC-UA-Server auf, nämlich hier dem Servergerät 12 (SESS START). Das Clientgerät teilt in einem Schritt S12 dem Servergerät 12 beispielsweise über den an sich bekannten OPC-UA-Mechanismus mit, an welchen Werten (VAR) A, B, C, D, H das Clientgerät interessiert ist. Hierbei können auch Übertragungseigenschaften mitgeteilt werden, beispielsweise mit welcher Updaterate und/oder welche Telegrammgröße gewünscht ist oder ab welcher Wertänderung (Dead Band) ein aktueller Variablenwert ausgesendet werden soll. Der Server überprüft in einem Schritt S14, ob er bereits für die Kombination der Variablenwerte oder für einen Teil der Variablenwerte eine Variablengruppe gebildet oder definiert öder publiziert hat (VG?). Falls dies der Fall ist (in FIG 2 durch ein "Pluszeichen" symbolisiert), wird durch das Servergerät 12 dem Client die Gruppenadresse GA1, GA2 der Variablengruppe mitgeteilt. Ist noch keine geeignete Variablengruppe vorhanden (in FIG 2 durch ein "Minuszeichen" symbolisiert), wird eine neue Variablengruppe angelegt und auch ein ID (Identifikation), d.h. eine Multitarget-Adresse oder Gruppenadresse, in einem Zwischenschritt S16' angelegt, bevor die Gruppenadresse im Schritt S16 mitgeteilt wird.

Danach kann optional vorgesehen sein, dass die OPC-UA-Session in einem Schritt S18 beendet wird, sodass seitens des Clients keine Sendeleistung mehr nötig ist.

Das Servergerät 12 sendet dann in einem Schritt S20 bevorzugt zyklisch die Multitarget-Telegramme 22 mit den Aktualwerten der gewünschten Variablengruppe VG1, VG2 an die Gruppenadressen GA1, GA2. Durch das zyklische Aussenden ergibt sich der besondere Vorteil, dass eine ungesicherte Übertragung, d.h. ohne das Erfordernis einer Empfangsbestätigung durch die Clientgeräte 14, 16, 18, erfolgen kann. Falls ein Multitarget-Telegramm 22 eines der Clientgeräte 14, 16, 18 nicht erreicht, so ist sichergestellt, dass mit dem nächsten Sendezyklus wieder aktuelle Variablenwerte an das Clientgerät übertragen werden.

In einem Schritt S22 kann das Servergerät 12 überprüfen, ob eine Änderung der Subskriptionen stattgefunden hat, ob also ein Clientgerät 14, 16, 18 sich von einer Variablengruppe abgemeldet hat. Hierzu kann das Clientgerät wieder in der beschriebenen Weise eine OPC-UA-Session aufbauen und die Menge der mitzuteilenden Prozessparameter verändern. In dem Schritt S22 kann dann das Servergerät 12 überprüfen, ob jede Variablengruppe überhaupt noch ein Mitglied (MEMB) aufweist. Ist dies der Fall (+), so wird im Schritt S20 mit dem zyklischen Aussenden der Variablenwerte der Variablengruppe: fortgefahren (SEND VG). Meldet sich das letzte Clientgerät von einer Variablengruppe ab, wird diese im Servergerät 12 in einem Schritt S24 entweder gelöscht und das Servergerät 12 publiziert oder sendet keine Updates mehr für diese Variablengruppe aus (END). Alternativ hierzu kann die Variablengruppe beibehalten werden und nur das Aussenden unterbrochen werden. Wird die Variablengruppe nach Abmelden des letzten Clientgeräts nicht gelöscht, ist dies vorteilhaft, da zum Beispiel bei einer neuen Anmeldung eines Clientgeräts für diese Variablengruppe die Variablengruppe nicht neu erstellt werden muss.

Um das beschriebene Prinzip der Variablengruppe im Standard OPC UA zu realisieren, können folgende Eigenschaften der Variablengruppe vorgesehen sein. Eine Variablengruppe ist eine Referenz auf eine Menge von Variablen und fasst diese somit zu einer Entität zusammen. Die Variablen selbst sind nicht Bestandteil der Variablengruppe. Eine Variablengruppe ist als eine atomare Menge zu betrachten. Sollten in verschiedenen Variablengruppen dieselben Variablen adressiert sein, so sind diese trotzdem als getrennte Entitäten zu betrachten. Mit anderen Worten würden diese Variablen mehrfach publiziert werden. Das Datenpaket, das aus den Werten einer Variablengruppe resultiert, also das jeweilige Multitarget-Telegramm, muss in einem UDP-Datagramm versendet werden können, wenn das Protokoll UDP verwendet wird.

Indem im optionalen Schritt S18 die OPC-UA-Session beendet werden kann, ergibt sich der Vorteil, dass auch sehr rechenschwache Geräte nun mit aktuellen Prozesswerten versorgt werden können. Es wird ein synonymer Mechanismus zwischen OPC UA und der Übertragung von Prozessabbildern ermöglicht. Hiermit ist es erstmalig möglich, OPC UA effektiv in der Feldebene, also für einzelne Aktoren und/oder Sensoren zur Kopplung von automatisierungstechnischen Geräten einzusetzen.

Im Server werden Ressourcen eingespart, da der Server keine Verwaltung von Publish-Requests und Notifications - Nachrichten, die Bestandteil des Standard OPC UA sind - implementieren muss.

Neben der beschriebenen Variante, dass die Aushandlung der Eigenschaften für die Variablenwerte, d.h. der Subskription, über den OPC-UA-Mechanismus erfolgt, sind auch andere Wege möglich, beispielsweise eine Vorprojektierung oder eine Aushandlung über einen anderen Verbindungsaufbau, beispielsweise spezielle Endpunkte, also beispielsweise TCP-Sockets (TCP - Transport Control Protocol).

Ein Clientgerät kann Wertänderungen einer Variablengruppe auch verschlüsselt übertragen. Die Verschlüsselungsparameter, zum Beispiel der Schlüssel, können über die bereits genannten Wege zur Aushandlung der Eigenschaft der Subskription ausgetauscht werden. Hiermit ist sichergestellt, dass der Schlüs-sel sicher übertragen wird.

Um die Deterministik der Übertragung sicherzustellen, können zum Beispiel AVB- oder TSN-Streams verwendet werden. Diese garantierten die Bandbreite für die Übertragung.

Die Verwendung von UDP ist als exemplarisch anzusehen. Verwendbar sind alle Übertragungswege, die Multitarget- oder Broadcast-Übertragungen unterstützen. Insbesondere bei Verwendung von IPv6 (Internetprotokoll, Version 6) wird es damit möglich, eine solche Kommunikation über Subnetze hinweg zu etablieren.

Wenn als Übertragungsprotokoll ein abgesichertes Protokoll verwendet wird, beispielsweise TCP, kann die Aktualisierung auch azyklisch übertragen werden. In diesem Fall können auch nur Wertänderungen übertragen werden anstatt eines kompletten Prozessabbilds.

Insgesamt zeigt das Beispiel, wie durch die Erfindung UDP-Multitarget-Subscriptions für OPC-UA bereitgestellt werden können.

### Bezugszeichenliste

- 10: Anlage
- 12: Servergerät
- 14: Clientgerät
- 16: Clientgerät
- 18: Clientgerät
- 20: Datennetz
- 22: Multitarget-Telegramm

- S10 bis S24: Verfahrensschritte

## Patentansprüche

1. Verfahren zum Betreiben eines Servergeräts (12) in einer Anlage (10), in welcher das Servergerät (12) zu unterschiedlichen Sendezeitpunkten von zumindest einem Prozessparameter eines von der Anlage (10) gesteuerten Prozesses jeweils einen aktuellen Prozesswert (A, B, C) ermittelt und an mehrere Clientgeräte (14, 16, 18) der Anlage (10) jeweils zu jedem oder einer Untermenge des zumindest einen Prozessparameters die ermittelten aktuellen Prozesswerte (A, B, C) über ein Datennetzwerk (20) aussendet,
- das Servergerät (12) bildet eine Schnittmenge (VG1) aus zumindest einem Prozessparameter, der an mehr als eines der Clientgeräte (14, 16, 18) auszusenden ist (S16'),
- das Servergerät (12) fasst zu den unterschiedlichen Sendezeitpunkten jeweils die aktuellen Prozesswerte (A, B, C) des zumindest einen Prozessparameters der Schnittmenge (VG1) zu einem einzigen Multitarget-Telegramm (22) zusammen und sendet das Multitarget-Telegramm (22) an eine Gruppenadresse (GA1) in das Datennetzwerk (20) aus (S20),- das Servergerät (12) empfängt von jedem Clientgerät (14, 16, 18) ein jeweiliges Anfragetelegramm, in welchem angegeben ist, von welchem des zumindest einen Prozessparameters die jeweiligen aktuellen Prozesswerte (A, B, C) an das Clientgerät (14, 16, 18) auszusenden sind (S12),
- das Servergerät (12) bildet auf der Grundlage der empfangenen Anfragetelegramme die Schnittmenge (VG1),
- das Servergerät (12) legt zu der Schnittmenge (VG1) die Gruppenadresse (GA1) fest und teilt die Gruppenadresse (GA1) denjenigen Clientgeräten (14, 16, 18) mit, in deren Anfragetelegramm der zumindest eine Prozessparameter der Schnittmenge (VG1) angegeben ist (S16),
- das Servergerät (12) empfängt von jedem Clientgerät (14, 16, 18) jeweils zumindest einen von dem Clientgerät (14, 16, 18) vorgegebenen Sendeparameterwert zu einem Sendeparameter, der ein Sendeverhalten des Servergeräts (12) steuert,
- das Servergerät (12) wählt aus dem zumindest einen Prozessparameter zum Bilden der Schnittmenge (VG1) derart aus, dass die Sendeparameterwerte jedes Prozessparameters der Schnittmenge (VG1) ein vorbestimmtes Ähnlichkeitskriterium erfüllen, **dadurch gekennzeichnet, dass**
der Sendeparameterwert die Updaterate des Prozessparameters ist.

2. Verfahren nach Anspruch 1,
**gekennzeichnet durch** den Schritt:
- das Servergerät (12) empfängt von zumindest einem der Clientgeräte (14, 16, 18) das jeweilige Anfragetelegramm in einer Konfigurationsphase über eine Netzwerkverbindung während einer OPC-UA-Sitzung (S10) nach dem Standard OPC-UA.

3. Verfahren nach Anspruch 1 oder 2,
**gekennzeichnet durch** den Schritt:
- das Servergerät (12) ermittelt für zumindest einen Sendeparameter einen jeweiligen optimalen Sendeparameterwert in Abhängigkeit von allen zu der Schnittmenge (VG1) vorgegebenen Sendeparameterwerten auf der Grundlage eines vorbestimmten Optimierungskriteriums,
- das Servergerät (12) stellt zum Senden jedes Multitarget-Telegramms (22) den zumindest einen Sendeparameter auf den jeweiligen optimierten Sendeparameterwert ein.

4. Verfahren nach einem der vorhergehenden Ansprüche,
**gekennzeichnet durch** den Schritt:
- das Servergerät (12) schließt den Sendevorgang jedes Multitarget-Telegrämms (22) jeweils unabhängig von einer Empfangsbestätigung der Clientgeräte (14, 16, 18) ab, wobei der Sendevorgang hierzu insbesondere über einen UDP-Multitarget, einen UDP-Broadcast, einen AVB-Stream oder einen TSN-Stream ausgeführt wird.

5. Verfahren nach einem der vorhergehenden Ansprüche,
**gekennzeichnet durch** den Schritt:
- das Servergerät (12) verhandelt mit den Clientgeräten (14, 16, 18) jeweils eine Formatvorgabe für ein reduziertes Format jedes Prozessparameters, für den an das jeweilige Clientgerät (14, 16, 18) die Prozesswerte auszusenden sind, aus und bildet die Schnittmenge (VG1) unter Berücksichtigung der ausgehandelten Formatvorgabe.

6. Verfahren nach einem der vorhergehenden Ansprüche,
**gekennzeichnet durch** den Schritt:
- das Servergerät (12) bildet zusätzlich der zu Schnittmenge (VG1) noch zumindest eine weitere Schnittmenge (VG2) aus jeweils zumindest einem Prozessparameter, der an mehrere der Clientgeräte (14, 16, 18) auszusenden ist.

7. Verfahren nach Anspruch 6,
**gekennzeichnet durch** den Schritt:
- das Servergerät (12) fasst die zwei Schnittmengen (VG1, VG2) zusammen und sendet nur zu der größeren der beiden Schnittmengen (VG1, VG2) zu den unterschiedlichen Sendezeitpunkten das Multitarget-Telegramm (22) aus, falls die kleinere Schnittmenge eine echte Teilmenge der größeren Schnittmenge ist.

8. Gerät (12) für eine Anlage (10) zum Steuern eines Prozesses, wobei das Gerät (12) dazu ausgelegt ist, als Servergerät (12) ein Verfahren nach einem der vorhergehenden Ansprüche durchzuführen.

9. Anlage (10) zum Steuern eines Prozesses, wobei die Anlage (10) zumindest ein Gerät (12) nach Anspruch 8 und mehrere Clientgeräte (14, 16, 18) aufweist, wobei ein Clientgerät dazu ausgelegt ist,
- an das Gerät (12) ein Anfragetelegramm, in welchem angegeben ist, von welchem von zumindest einem Prozessparameter an das Clientgerät (14, 16, 18) jeweils Prozesswerte (A, B, C) auszusenden sind, über ein Datennetzwerk (20) auszusenden,
- von dem Gerät (12) eine Gruppenadresse (GA1) über das Datennetzwerk (20) zu empfangen und
- über das Datennetzwerk (20) zu unterschiedlichen Sendezeitpunkten jeweils ein an die Gruppenadresse (GA1) adressiertes Multitarget-Telegramm (22) zu empfangen und aus dem Multitarget-Telegramm (22) zumindest einen darin enthaltenen Prozesswert (A, B, C) auszulesen.

## Claims

1. Method for operating a server device (12) in an installation (10) in which the server device (12) ascertains a respective current process value (A, B, C) at different transmission times for at least one process parameter of a process controlled by the installation (10) and transmits the ascertained current process values (A, B, C) to multiple client devices (14, 16, 18) of the installation (10), via a data network (20), for each or a subset of the at least one process parameter in each case,
- the server device (12) forms an intersection (VG1) from at least one process parameter that is to be transmitted to more than one of the client devices (14, 16, 18) (S16'),
- the server device (12) combines the respective current process values (A, B, C) of the at least one process parameter of the intersection (VG1) into a single multitarget telegram (22) at the different transmission times and transmits the multitarget telegram (22) into the data network (20) to a group address (GA1) (S20),
- the server device (12) receives from each client device (14, 16, 18) a respective enquiry telegram that contains an indication of from which of the at least one process parameter the respective current process values (A, B, C) are to be transmitted to the client device (14, 16, 18) (S12),
- the server device (12) forms the intersection (VG1) on the basis of the received enquiry telegrams,
- the server device (12) stipulates the group address (GA1) for the intersection (VG1) and communicates the group address (GA1) to those client devices (14, 16, 18) whose enquiry telegram contains an indication of the at least one process parameter of the intersection (VG1) (S16),
- the server device (12) receives from each client device (14, 16, 18) at least one respective transmission parameter value, prescribed by the client device (14, 16, 18), for a transmission parameter that controls a transmission behavior of the server device (12),
- the server device (12) selects the intersection (VG1) from the at least one process parameter, in order to form the intersection (VG1), such that the transmission parameter values of each process parameter of the intersection (VG1) satisfy a predetermined similarity criterion,
**characterized in that**
the transmission parameter value is the update rate of the process parameter.

2. Method according to Claim 1,
**characterized by** the step:
- the server device (12) receives from at least one of the client devices (14, 16, 18) the respective enquiry telegram in a configuration phase via a network connection during an OPC-UA session (S10) according to the OPC-UA standard.

3. Method according to Claim 1 or 2,
**characterized by** the step:
- the server device (12) ascertains a respective optimum transmission parameter value for at least one transmission parameter on the basis of all transmission parameter values prescribed for the intersection (VG1), based on a predetermined optimization criterion,
- the server device (12) sends each multitarget telegram (22) by setting the at least one transmission parameter to the respective optimized transmission parameter value.

4. Method according to one of the preceding claims,
**characterized by** the step:
- the server device (12) concludes the transmission process for each multitarget telegram (22) in each case independently of an acknowledgment of receipt from the client devices (14, 16, 18), the transmission process to this end being carried out particularly using a UDP multitarget, a UDP broadcast, an AVB stream or a TSN stream.

5. Method according to one of the preceding claims,
**characterized by** the step:
- the server device (12) negotiates with the client devices (14, 16, 18) a respective format requirement for a reduced format of each process parameter for which the process values are to be transmitted to the respective client device (14, 16, 18), and forms the intersection (VG1) by taking into consideration the negotiated format requirement.

6. Method according to one of the preceding claims,
**characterized by** the step:
- the server device (12) also forms, in addition to the intersection (VG1), at least one further intersection (VG2) from at least one respective process parameter that is to be transmitted to multiple instances of the client devices (14, 16, 18).

7. Method according to Claim 6,
**characterized by** the step:
- the server device (12) combines the two intersections (VG1, VG2) and transmits the multitarget telegram (22) only for the larger of the two intersections (VG1, VG2) at the different times if the smaller intersection is a genuine subset of the larger intersection.

8. Device (12) for an installation (10) for controlling a process, wherein the device (12) is designed to perform a method according to one of the preceding claims as a server device (12).

9. Installation (10) for controlling a process, wherein the installation (10) has at least one device (12) according to Claim 8 and a plurality of client devices (14, 16, 18), wherein one client device is designed
- to transmit to the device (12), via a data network (20), an enquiry telegram that contains an indication of from which of at least one process parameter respective process values (A, B, C) are to be transmitted to the client device (14, 16, 18),
- to receive from the device (12) a group address (GA1) via the data network (20), and
- to receive via the data network (20), at different transmission times, a respective multitarget telegram (22) addressed to the group address (GA1) and to read from the multitarget telegram (22) at least one process value (A, B, C) contained therein.

## Revendications

1. Procédé destiné à exploiter un appareil serveur (12) dans une installation (10), dans laquelle l'appareil serveur (12) détermine respectivement une valeur de processus actuelle (A, B, C) à différents moments de diffusion d'au moins un paramètre de processus d'un processus commandé par l'installation (10) et envoie à plusieurs appareils clients (14, 16, 18) de l'installation (10) respectivement à chaque ou à un sous-ensemble de l'au moins un paramètre de processus les valeurs de processus actuelles déterminées (A, B, C) via un réseau de données (20),
- l'appareil serveur (12) forme une intersection (VG1) à partir d'au moins un paramètre de processus qui est à envoyer (S16') à plus d'un des appareils clients (14, 16, 18),
- l'appareil serveur (12) regroupe aux différents moments de diffusion respectivement les valeurs de processus actuelles (A, B, C) de l'au moins un paramètre de processus de l'intersection (VG1) dans un télégramme à cibles multiples unique (22) et envoie (S20) le télégramme à cibles multiples (22) à une adresse de groupe (GA1) dans le réseau de données (20),
- l'appareil serveur (12) reçoit de chaque appareil client (14, 16, 18) un télégramme de demande respectif dans lequel il est indiqué par lequel de l'au moins un paramètre de processus les valeurs de processus actuelles respectives (A, B, C) sont à envoyer à l'appareil client (14, 16, 18),
- l'appareil serveur (12) forme l'intersection (VG1) sur la base des télégrammes de demande reçus,
- l'appareil serveur (12) définit pour l'intersection (VG1) l'adresse de groupe (GA1) et communique l'adresse de groupe (GA1) aux appareils clients (14, 16, 18) dans le télégramme de demande desquels l'au moins un paramètre de processus de l'intersection (VG1) est indiqué (S16),
- l'appareil serveur (12) reçoit de chaque appareil client (14, 16, 18) respectivement au moins une valeur de paramètre de diffusion prédéfinie par l'appareil client (14, 16, 18) pour un paramètre de diffusion, qui commande un comportement de diffusion de l'appareil serveur (12),
- l'appareil serveur (12) opère une sélection à partir de l'au moins un paramètre de processus pour la formation de l'intersection (VG1) de telle sorte que les valeurs de paramètre de diffusion de chaque paramètre de processus de l'intersection (VG1) répondent à un critère de similitude prédéterminé,
**caractérisé en ce que**
la valeur de paramètre de diffusion est le taux de mise à jour du paramètre de processus.

2. Procédé selon la revendication 1,
**caractérisé par** l'étape :
- l'appareil serveur (12) reçoit d'au moins un des appareils clients (14, 16, 18) le télégramme de demande respectif dans une phase de configuration via une connexion réseau pendant une session OPC-UA (S10) selon la norme OPC-UA.

3. Procédé selon la revendication 1 ou 2,
**caractérisé par** l'étape :
- l'appareil serveur (12) détermine pour au moins un paramètre de diffusion une valeur de paramètre de diffusion optimale respective en fonction de toutes les valeurs de paramètre de diffusion prédéfinies pour l'intersection (VG1) sur la base d'un critère d'optimisation prédéterminé,
- l'appareil serveur (12) règle pour la diffusion de chaque télégramme à cibles multiples (22) l'au moins un paramètre de diffusion sur la valeur de paramètre de diffusion optimisée respective.

4. Procédé selon l'une des revendications précédentes,
**caractérisé par** l'étape :
- l'appareil serveur (12) met fin à la diffusion de chaque télégramme à cibles multiples (22) respectivement indépendamment d'une confirmation de réception des appareils clients (14, 16, 18), dans lequel la diffusion est exécutée à cet effet en particulier via un protocole à cibles multiples UDP, un protocole de diffusion UDP, un flux AVB ou un flux TSN.

5. Procédé selon l'une des revendications précédentes,
**caractérisé par** l'étape :
- l'appareil serveur (12) négocie avec les appareils clients (14, 16, 18) respectivement une exigence de format pour un format réduit de chaque paramètre de processus, pour lequel les valeurs de processus sont à envoyer à l'appareil client (14, 16, 18) respectif, et forme l'intersection (VG1) en prenant en compte l'exigence de format négociée.

6. Procédé selon l'une des revendications précédentes,
**caractérisé par** l'étape :
- l'appareil serveur (12) forme en outre l'au moins une autre intersection (VG2) en plus de l'intersection (VG1) à partir respectivement d'au moins un paramètre de processus qui est à envoyer à plusieurs des appareils clients (14, 16, 18).

7. Procédé selon la revendication 6,
**caractérisé par** l'étape :
- l'appareil serveur (12) regroupe les deux intersections (VG1, VG2) et envoie uniquement à la plus grande des deux intersections (VG1, VG2) aux différents moments de diffusion le télégramme à cibles multiples (22), dans le cas où la plus petite intersection est une vraie portion de la plus grande intersection.

8. Appareil (12) pour une installation (10) destiné à la commande d'un processus, dans lequel l'appareil (12) est conçu pour exécuter un procédé selon l'une des revendications précédentes en tant qu'appareil serveur (12).

9. Installation (10) destinée à la commande d'un processus, dans laquelle l'installation (10) présente au moins un appareil (12) selon la revendication 8 et plusieurs appareils clients (14, 16, 18), dans laquelle l'appareil client est conçu pour
- envoyer à l'appareil (12) un télégramme de demande dans lequel il est indiqué par lequel de l'au moins un paramètre de processus des valeurs de processus (A, B, C) sont respectivement à envoyer à l'appareil client (14, 16, 18) via un réseau de données (20),
- recevoir une adresse de groupe (GA1) par l'appareil (12) via le réseau de données (20) et
- recevoir via le réseau de données (20) à différents moments de diffusion respectivement un télégramme à cibles multiples (22) adressé à l'adresse (GA1) et lire dans le télégramme à cibles multiples (22) au moins une valeur de processus (A, B, C) contenue dans celui-ci.
